# EUROPÄISCHE PATENTSCHRIFT

(11) **EP 2 619 492 B1**
(45) Veröffentlichungstag und Bekanntmachung des Hinweises auf die Patenterteilung: **27.06.2018**
(21) Anmeldenummer: 11736100.6
(22) Anmeldetag: 27.07.2011
(51) Int. Cl.: F16K 1/42, B60T 8/36, B60T 17/04

(54) **VENTIL ZUM STEUERN VON FLUIDEN**
VALVE FOR CONTROLLING FLUIDS
SOUPAPE POUR LA COMMANDE DE FLUIDES

(30) Priorität: 24.09.2010 DE 102010041300
(43) Veröffentlichungstag der Anmeldung: 31.07.2013
(73) Patentinhaber: Robert Bosch GmbH, 70442 Stuttgart (DE)
(72) Erfinder: FINK, Reinhard, 68163 Mannheim (DE); FOERCH, Dirk, 74196 Neuenstadt/Stein (DE); WEITZE, Thomas, 71254 Ditzingen (DE)
(86) Internationale Anmeldenummer: PCT/EP2011/062885
(87) Internationale Veröffentlichungsnummer: WO 2012/038122

(56) Entgegenhaltungen:
- CH-A- 168 607
- JP-A- 59 140 967
- US-A- 2 846 182
- US-A- 4 936 342
- US-A1- 2005 151 109
- US-A1- 2006 196 577

## Beschreibung

### Stand der Technik

Die vorliegende Erfindung betrifft ein Ventil zum Steuern von Fluiden und insbesondere ein Rückschlagventil für ein Bremssystem eines Fahrzeugs.

Ventile zum Steuern von Fluiden sind aus dem Stand der Technik in unterschiedlichen Ausgestaltungen bekannt. Ein Einsatzgebiet derartiger Ventile sind beispielsweise Bremssysteme zur Steuerung der Hydraulikflüssigkeit. Insbesondere zur Gewichts- und Bauraumreduzierung wird in jüngster Zeit versucht, derartige Systeme sowie auch alle Komponenten zu verkleinern. Allerdings müssen bei der Anwendung bei Bremshydrauliken gewisse Mindestdurchflussgrößen sichergestellt werden. Ferner darf ein Durchflusswiderstand durch das Ventil nicht zu groß sein. Bei reduzierten Abmessungen muss jedoch gegebenenfalls eine Hubhöhe des Ventils vergrößert werden. Hierdurch wird es jedoch begünstigt, dass das Schließelement des Ventils verloren gehen kann. Es wäre daher wünschenswert, ein kostengünstiges und kleinbauendes Ventil zu haben, bei dem ein Verlust des Schließelements vermieden werden kann. JP 59140967 A beschreibt ein Steuerungsventil mit am Umfang eines Ventilsitzkörpers angebrachten geschlitzten Dämpfungsplatten zur Dämpfung der Energie des durch das Ventil strömenden Fluids. Die US 4,936,342 A1 zeigt ein Kraftstoff-Drucksteuerventil, mit einem Käfig, in welchem das Schließelement gehalten ist.

### Offenbarung der Erfindung

Das erfindungsgemäße Ventil zum Steuern von Fluiden mit den Merkmalen des Anspruchs 1 weist demgegenüber den Vorteil auf, dass eine Gefahr eines Verlierens des Schließelements signifikant reduziert ist. Trotzdem ist das erfindungsgemäße Ventil sehr kostengünstig herstellbar und weist nur sehr kleine Abmessungen auf. Dies wird erfindungsgemäß dadurch erreicht, dass das Ventil einen vorstehenden Bereich aufweist, welcher sich an einen Ventilsitz anschließt. Der vorstehende Bereich verläuft nur an einem Teilumfang des Ventilsitzes. Der vorstehende Bereich verhindert, dass ein Schließelement zu weit vom Ventilsitz entfernt werden kann und verloren geht, wobei trotzdem eine hohe Durchflussrate durch das geöffnete Ventil sichergestellt werden kann, da der vorstehende Bereich nicht am gesamten Umfang des Ventilsitzes vorhanden ist. Somit verhindert der vorstehende Bereich, dass bei geöffnetem Ventil das Schließelement durch die Fluidströmung durch das Ventil seitlich weggedrückt werden kann und im Extremfall verloren gehen könnte, ohne einen Durchflusswiderstand zu erhöhen.

Die Unteransprüche zeigen bevorzugte Weiterbildungen der Erfindung.

Vorzugsweise ist der vorstehende Bereich einstückig mit dem Ventilsitz gebildet. Hierdurch kann eine besonders einfache und kostengünstige Herstellbarkeit erreicht werden.

Besonders bevorzugt ist der vorstehende Bereich kronenartig mit einer Vielzahl von in Hubrichtung des Schließelements vorstehenden Elementen gebildet, welche durch Zwischenräume voneinander getrennt sind. Die vorstehenden Elemente verhindern, dass das Schließelement verloren gehen kann, wobei bei geöffnetem Ventil Fluid auch zwischen den vorstehenden Elementen hindurchströmen kann.

Weiter bevorzugt sind die Zwischenräume zwischen den vorstehenden Elementen des kronenartigen Bereichs in Umfangsrichtung derart ausgebildet, dass eine Bogenlänge der Zwischenräume in Umfangsrichtung gleich einer Bogenlänge der vorstehenden Elemente in Umfangsrichtung ist.

Besonders bevorzugt ist der vorstehende Bereich ausschließlich an weniger als einer Hälfte der gesamten Umfangslänge und mehr als einem Drittel der Umfangslänge am Ventilsitz vorgesehen.

Gemäß einer weiteren bevorzugten Ausgestaltung der Erfindung weist der vorstehende Bereich eine Länge in Hubrichtung des Schließelements auf, welche größer ist als ein Hub des Schließelements. Hierdurch kann ein besonders sicheres Halten des Schließelements am Ventil erreicht werden.

Der Ventilsitz ist vorzugsweise konisch ausgebildet. Gemäß der Erfindung geht der Ventilsitz in einen vollständig umlaufenden Randbereich über, wobei der vorstehende Bereich dann am Randbereich ausgebildet ist.

Gemäß einer weiteren bevorzugten Ausgestaltung der Erfindung weist das Schließelement einen Dichtkegel zur Abdichtung am Ventilsitz auf, um eine große Dichtfläche bereitzustellen.

Besonders bevorzugt ist das erfindungsgemäße Ventil als Rückschlagventil ausgebildet und umfasst ferner einen Anschlag zur Begrenzung eines Hubes des Schließelements.

Weiterhin betrifft die vorliegende Erfindung eine Bremseinrichtung mit einem erfindungsgemäßen Ventil, insbesondere einem erfindungsgemäßen Rückschlagventil.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine perspektivische Ansicht eines Ventilkörpers für ein erfindungsgemäßes Ventil gemäß einem ersten Ausführungsbeispiel der Erfindung,
- Figur 2: eine schematische Schnittansicht des Ventilkörpers von Figur 1,
- Figur 3: eine schematische Schnittansicht des Ventils von Figur 1, und
- Figur 4: eine perspektivische Ansicht eines Ventilkörpers für ein erfindungsgemäßes Ventil gemäß einem zweiten Ausführungsbeispiel der Erfindung.

### Bevorzugte Ausführungsformen der Erfindung

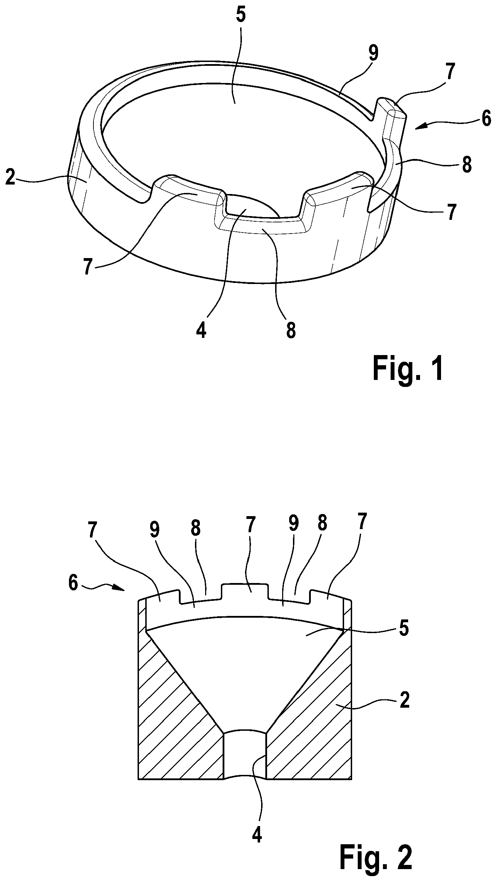

Nachfolgend wird unter Bezugnahme auf die Figuren 1 bis 3 ein Ventil 1 zum Steuern von Fluiden gemäß einem ersten bevorzugten Ausführungsbeispiel der vorliegenden Erfindung beschrieben. Das Ventil 1 des ersten Ausführungsbeispiels ist ein Rückschlagventil, welches in einem Bremskreislauf verwendet wird.

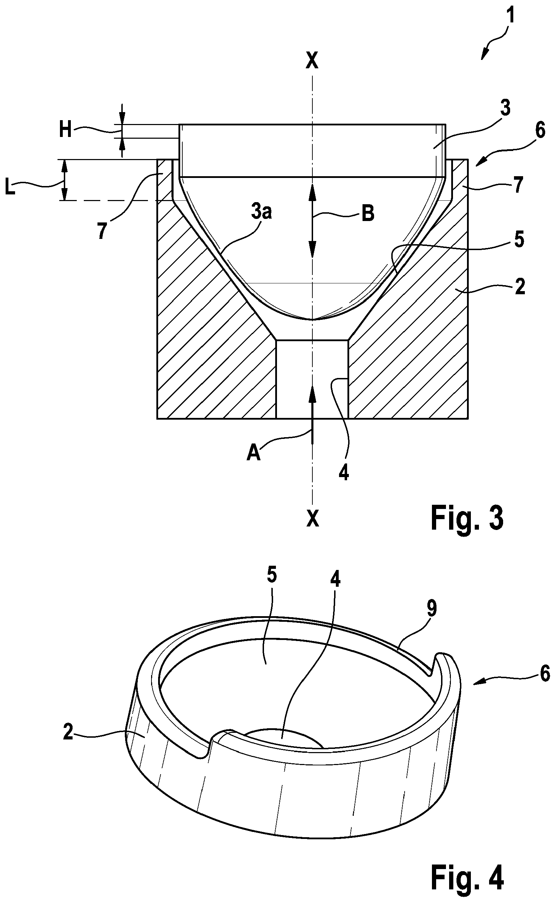

Wie aus Figur 3 ersichtlich ist, umfasst das Ventil 1 einen Ventilkörper 2 mit einer Durchgangsöffnung 4. Am Ventilkörper 2 ist ferner ein sich kegelförmig verjüngender Ventilsitz 5 ausgebildet. Ein Schließelement 3 gibt die Durchgangsöffnung 4 frei und verschließt die Durchgangsöffnung in abdichtender Weise am Ventilsitz 5. Dabei ist das Schließelement 3 mit einem Dichtkegel 3a ausgebildet. Das Schließelement 3 wird durch Anlegen eines Differenzdrucks geschlossen. Eine Bewegung des Schließelements 3 ist in Figur 3 durch den Doppelpfeil B angedeutet. Die Bewegungsrichtung des Schließelements 3 ist dabei in Richtung einer Mittelachse X-X des Ventils.

Der Pfeil A in Figur 3 zeigt eine Strömungsrichtung durch das Rückschlagventil an. Wie weiter insbesondere aus den Figuren 1 und 2 ersichtlich ist, ist ein in Strömungsrichtung gegen das Ende des Ventilsitzes 5 vorstehender Bereich 6 gebildet. Der vorstehende Bereich 6 ist kronenartig gebildet. Der vorstehende kronenartige Bereich 6 umfasst mehrere vorstehende Elemente 7, welche in Umfangsrichtung mit jeweils einem Zwischenraum 8 voneinander beabstandet sind. Die vorstehenden Elemente 7 stehen dabei in axialer Richtung vor und sind bogenförmig gebildet. Der vorstehende kronenartige Bereich 6 ist, wie aus Figur 1 ersichtlich ist, nur an einer Hälfte des äußeren Umfangs des Ventilsitzes 5 gebildet.

Wie weiter aus Figur 1 ersichtlich ist, ist am Ventilsitz 5 zuerst ein vollständig umlaufender Randbereich 9 ausgebildet, welcher jedoch nur eine kleine axiale Höhe aufweist. Auf diesem Randbereich 9 sind dann die vorstehenden Elemente 7 des vorstehenden, kronenartigen Bereichs 6 angeordnet. In diesem Ausführungsbeispiel ist der Ventilkörper 2 mitsamt dem Randbereich 9 und dem vorstehenden Bereich 6 als ein einstückiges Bauteil vorgesehen, welches beispielsweise durch Spritzgießen herstellbar ist.

Wie weiter aus Figur 1 ersichtlich ist, ist eine Bogenlänge der vorstehenden Elemente 7 in Umfangsrichtung gleich einer Bogenlänge der Zwischenräume 8. Hierdurch wird sichergestellt, dass die vorstehenden Elemente 7 keine zu große Fläche einnehmen, welche eine Strömung des Fluids durch das geöffnete Ventil hindurch einschränken könnte. Allerdings weisen die vorstehenden Elemente 7 eine Länge L in axialer Richtung X-X auf, welche größer als ein Hub H des Schließelements 3 ist. Hierdurch verhindern die vorstehenden Elemente 7, dass das Schließelement 3 bei geöffnetem Ventil seitlich von Ventilsitz 5 herausgedrückt wird und verloren geht. Hierbei üben die vorstehenden Elemente 7 eine Haltefunktion aus, ohne dass eine Durchflussmenge in zu großem Maße reduziert wird und ohne dass ein unerwünschter großer Durchflusswiderstand am geöffneten Ventil auftritt.

Nachfolgend wird unter Bezugnahme auf Figur 4 ein Ventilkörper 2 gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Im Unterschied zum ersten Ausführungsbeispiel weist der Ventilkörper 2 des zweiten Ausführungsbeispiels einen nicht unterbrochenen, durchgehenden, vorstehenden Bereich 6 auf. Der vorstehende Bereich 6 ist somit beim zweiten Ausführungsbeispiel nur über einen Teilumfang am Ventilsitz 5 vorgesehen. In diesem Ausführungsbeispiel beträgt eine Umfangslänge des vorstehenden Bereichs 6 zwischen einem Drittel und einer Hälfte des Gesamtumfangs am Ventilsitz 5. Durch das Vorsehen eines nur über einen Teilumfang vorgesehenen vorstehenden Bereichs 6 kann neben einer Verhinderung eines Verlierens des Schließelements gezielt eine Strömungsrichtung des Fluids beeinflusst werden. Da ein Durchmesser des Schließelements kleiner als ein minimaler innerer Durchmesser des vorstehenden Bereichs 6 ist, wird vermieden, dass eine Strömung nahe dem vorstehenden Bereich 6 behindert wird.

Somit weist ein erfindungsgemäßes Ventil 1 gemäß den beschriebenen Ausführungsbeispielen eine von den bekannten Ventilarten abweichende Gestaltung eines in Strömungsrichtung liegenden Endes des Ventilsitzes 5 auf, indem der vorstehende Bereich 6 vorgesehen wird. Die Erfindung wird vorzugsweise in Verbindung mit einem Rückschlagventil bei Bremssystemen verwendet.

## Patentansprüche

1. Bremseinrichtungsventil zum Steuern von Fluiden, umfassend:
- einen Ventilkörper (2) mit einer Durchgangsöffnung (4),
- einen sich verjüngenden Ventilsitz (5), welcher am Ventilkörper (2) ausgebildet ist,
- ein Schließelement (3), welches die Durchgangsöffnung (4) am Ventilsitz (5) freigibt und verschließt, und
- einen sich an den Ventilsitz (5) anschließenden vorstehenden Bereich (6), wobei der vorstehende Bereich (6) nur über einen Teilumfang am Ventilsitz (5) verläuft, und
- wobei das Schließelement (3) bei geöffnetem Ventil mittels des vorstehenden Bereichs (6) radial gehalten wird, und
- wobei der Ventilsitz (5) in einen vollständig umlaufenden Randbereich (9) übergeht und der vorstehende Bereich (6) auf dem Randbereich (9) gebildet ist.

2. Ventil nach Anspruch 1, **dadurch gekennzeichnet, dass** der vorstehende Bereich (6) einstückig mit dem Ventilsitz (5) gebildet ist.

3. Ventil nach Anspruch 1 oder 2, **dadurch gekennzeichnet, dass** der vorstehende Bereich (6) kronenartig mit einer Vielzahl von in Hubrichtung (B) des Schließelements (3) vorstehenden Elementen (7), welche durch Zwischenräume (8) voneinander getrennt sind, gebildet ist.

4. Ventil nach Anspruch 3, **dadurch gekennzeichnet, dass** Zwischenräume (8) zwischen den vorstehenden Elementen (7) in Umfangsrichtung eine gleiche Bogenlänge wie die vorstehenden Elemente (7) aufweisen.

5. Ventil nach einem der vorhergehenden Ansprüche, **dadurch gekennzeichnet, dass** der vorstehende Bereich (6) ausschließlich an weniger als einer Hälfte der gesamten Umfangslänge und mehr als einem Drittel der Umfangslänge ausgebildet ist.

6. Ventil nach einem der vorhergehenden Ansprüche, **dadurch gekennzeichnet, dass** der vorstehende Bereich (6) eine Länge (L) in Hubrichtung (B) des Schließelements (3) aufweist, welche größer ist als ein Hub (H) des Schließelements (3).

7. Ventil nach einem der vorhergehenden Ansprüche, **dadurch gekennzeichnet, dass** der Ventilsitz (5) konisch ausgebildet ist.

8. Ventil nach einem der vorhergehenden Ansprüche, **dadurch gekennzeichnet, dass** das Ventil als Rückschlagventil ausgebildet ist.

9. Bremseinrichtung für Fahrzeuge, umfassend ein Ventil nach einem der vorhergehenden Ansprüche.

## Claims

1. Break device valve for controlling fluids, comprising:
- a valve body (2) having a passage opening (4),
- a tapering valve seat (5), which is formed on the valve body (2),
- a closing element (3), which opens and closes the passage opening (4) on the valve seat (5), and
- a protruding area (6) adjoining the valve seat (5), wherein the protruding area (6) only extends over part of the circumference of the valve seat (5), and
- wherein the closing element (3) is held radially by means of the protruding area (6) when the valve is open, and
- wherein the valve seat (5) merges into an edge area (9) running round the entire circumference and the protruding area (6) is formed on the edge area.

2. Valve according to Claim 1, **characterized in that** the protruding area (6) is integrally formed with the valve seat (5).

3. Valve according to Claim 1 or 2, **characterized in that** the protruding area (6) is of a castellated formation having a plurality of elements (7) protruding in the lifting direction (B) of the closing element (3), which are separated from one another by spaces (8) .

4. Valve according to Claim 3, **characterized in that** spaces (8) between the protruding elements (7) have the same arc length in a circumferential direction as the protruding elements (7).

5. Valve according to one of the preceding claims, **characterized in that** the protruding area (6) is only formed on less than one half of the entire circumferential length and more than a third of the circumferential length.

6. Valve according to one of the preceding claims, **characterized in that** the protruding area (6) has a length (L) in the lifting direction (B) of the closing element (3) which is greater than a lift (H) of the closing element (3).

7. Valve according to one of the preceding claims, **characterized in that** the valve seat (5) is of tapered design.

8. Valve according to one of the preceding claims, **characterized in that** the valve is embodied as a non-return valve.

9. Brake device for vehicles, comprising a valve according to one of the preceding claims.

## Revendications

1. Soupape pour un dispositif de freinage, destinée à commander des fluides, comprenant :
- un corps de soupape (2) avec une ouverture de passage (4),
- un siège de soupape (5) se rétrécissant, qui est réalisé au niveau du corps de soupape (2),
- un élément de fermeture (3) qui ouvre et ferme l'ouverture de passage (4) au niveau du siège de soupape (5), et
- une région en saillie (6) se raccordant au siège de soupape (5), la région en saillie (6) ne s'étendant que sur une périphérie partielle sur le siège de soupape (5), et
- l'élément de fermeture (3), lorsque la soupape est ouverte, étant retenu radialement au moyen de la région en saillie (6), et
- le siège de soupape (5) se prolongeant par une région de bord (9) sur toute la périphérie et la région en saillie (6) étant formée sur la région de bord (9).

2. Soupape selon la revendication 1, **caractérisée en ce que** la région en saillie (6) est formée d'une seule pièce avec le siège de soupape (5).

3. Soupape selon la revendication 1 ou 2, **caractérisée** que la région en saillie (6) est formée en forme de couronne avec une pluralité d'éléments saillants (7) dans la direction de la course (B) de l'élément de fermeture (3), lesquels sont séparés les uns des autres par des espaces intermédiaires (8).

4. Soupape selon la revendication 3, **caractérisée en ce que** des espaces intermédiaires (8) présentent, entre les éléments saillants (7), dans la direction périphérique, une même longueur d'arc que les éléments saillants (7).

5. Soupape selon l'une quelconque des revendications précédentes, **caractérisée en ce que** la région en saillie (6) est réalisée exclusivement au niveau de moins d'une moitié de la longueur périphérique totale et de plus d'un tiers de la longueur périphérique.

6. Soupape selon l'une quelconque des revendications précédentes, **caractérisée en ce que** la région en saillie (6) présente une longueur (L) dans la direction de la course (B) de l'élément de fermeture (3) qui est supérieure à une course (H) de l'élément de fermeture (3).

7. Soupape selon l'une quelconque des revendications précédentes, **caractérisée en ce que** le siège de soupape (5) est réalisé sous forme conique.

8. Soupape selon l'une quelconque des revendications précédentes, **caractérisée en ce que** la soupape est réalisée sous forme de clapet antiretour.

9. Dispositif de freinage pour véhicules, comprenant une soupape selon l'une quelconque des revendications précédentes.
